# EUROPEAN PATENT APPLICATION

(11) **EP 4 350 836 A1**
(43) Date of publication of application: **10.04.2024**
(21) Application number: 22832719.3
(22) Date of filing: 06.06.2022
(51) Int. Cl.: H01M 10/0568, H01G 11/60, H01G 11/62, H01M 10/0569

(54) **METHOD FOR PRODUCING NONAQUEOUS ELECTROLYTE SOLUTION**

(30) Priority: 30.06.2021 JP 2021109036
(71) Applicant: Nippon Shokubai Co., Ltd., Osaka-shi, Osaka 541-0043 (JP)
(72) Inventor: WATABE Ryo, Suita-shi, Osaka 564-0034 (JP); KOBATAKE Takayuki, Suita-shi, Osaka 564-0034 (JP); OOKUBO Chie, Suita-shi, Osaka 564-0034 (JP); ARAKAWA Motohiro, Suita-shi, Osaka 564-0034 (JP); MORITA Tomohiro, Suita-shi, Osaka 564-0034 (JP)
(74) Representative: Germain Maureau
(86) International application number: PCT/JP2022/022741
(87) International publication number: WO 2023/276561

(57) **Abstract**

Disclosed is a method for producing a non-aqueous electrolyte solution containing a sulfonylimide compound represented by the general formula (1) and an electrolyte solution solvent (B). The method includes preparing a sulfonylimide solution containing the sulfonylimide compound represented by the general formula (1) and an electrolyte solution solvent (A) different from the electrolyte solution solvent (B) and fractionally distilling off the electrolyte solution solvent (A) by adding the electrolyte solution solvent (B) to the sulfonylimide solution obtained in the preparing,

LiN(RSO₂)(FSO₂) (1)

(where R represents a fluorine atom, an alkyl group with 1 to 6 carbon atoms, or a fluoroalkyl group with 1 to 6 carbon atoms).

## Description

### TECHNICAL FIELD

The present disclosure relates to a method for producing a non-aqueous electrolyte solution.

### BACKGROUND ART

Various studies have been made on non-aqueous electrolyte solutions used in secondary batteries and materials thereof to improve the performance of secondary batteries such as lithium ion secondary batteries. For example, Patent Document 1 proposes a method for producing an electrolyte solution material containing a specific fluorosulfonyl imide salt and an electrolyte solution solvent. In this production method, a solution containing the specific fluorosulfonyl imide salt and the electrolyte solution solvent is decompressed and/or heated to volatilize a production solvent of the fluorosulfonyl imide salt. This can provide an electrolyte solution material in which a remaining solvent that affects the characteristics of the electrolyte solution material is reduced.

### CITATION LIST

### PATENT DOCUMENT

Patent Document 1: International Publication No. 2016/052752

### SUMMARY OF THE INVENTION

### TECHNICAL PROBLEM

Users including battery manufacturers may use different electrolyte solution solvents. Thus, if the electrolyte solution solvent used for the production of the non-aqueous electrolyte solution were replaced with another electrolyte solution solvent designated by the user without the need of complicated steps such as extracting, it would be advantageous because a wider range of choices of the non-aqueous electrolyte solution or materials of the non-aqueous electrolyte solution can be offered to the users.

In view of such points, the present disclosure has been made to provide a method for producing a non-aqueous electrolyte solution that allows replacement of an electrolyte solution solvent used for the production of the non-aqueous electrolyte solution with another electrolyte solution solvent without the need of complicated steps such as extracting.

### SOLUTION TO THE PROBLEM

In order to achieve the object, the method of the present disclosure uses two types of electrolyte solution solvents and performs solvent replacement. Specifically, a solution containing a first electrolyte solution solvent is prepared in advance, and then the first electrolyte solution solvent is replaced with a second electrolyte solution solvent. The present disclosure will be specifically described below.

The present disclosure is directed to a method for producing a non-aqueous electrolyte solution containing a sulfonylimide compound represented by the general formula (1):

LiN(RSO₂)(FSO₂) (1)

(where R represents a fluorine atom, an alkyl group with 1 to 6 carbon atoms, or a fluoroalkyl group with 1 to 6 carbon atoms),
and an electrolyte solution solvent (B). The method includes: preparing a sulfonylimide solution containing the sulfonylimide compound represented by the general formula (1) and an electrolyte solution solvent (A) different from the electrolyte solution solvent (B); and fractionally distilling off the electrolyte solution solvent (A) by adding the electrolyte solution solvent (B) to the sulfonylimide solution obtained in the preparing.

In this production method, a difference in boiling point between the electrolyte solution solvent (A) and the electrolyte solution solvent (B) may be from 60°C to 300°C inclusive. The electrolyte solution solvent (A) may have a boiling point of 60°C or higher. The electrolyte solution solvent (B) may have a boiling point of 200°C or higher. The electrolyte solution solvent (A) and the electrolyte solution solvent (B) may be at least one selected from the group consisting of a carbonate solvent and an ester solvent. The electrolyte solution solvent (A) may be at least one selected from the group consisting of a chain carbonate solvent and a chain ester solvent. The electrolyte solution solvent (B) may be at least one selected from the group consisting of a cyclic carbonate solvent and a cyclic ester solvent. The non-aqueous electrolyte solution may contain 10000 ppm by mass or less of water. In the preparing, the electrolyte solution solvent (A) may be added to an aqueous sulfonylimide solution containing the sulfonylimide compound represented by the general formula (1) for dehydration. A residual amount of the electrolyte solution solvent (A) in the non-aqueous electrolyte solution may be 20 mass% or less with respect to 100 mass% of the non-aqueous electrolyte solution.

### ADVANTAGES OF THE INVENTION

The present disclosure can provide a method for producing a non-aqueous electrolyte solution or a material of the non-aqueous electrolyte solution, the method allowing replacement of an electrolyte solution solvent used for the production of the non-aqueous electrolyte solution with another electrolyte solution solvent without the need of complicated steps such as extracting.

### DESCRIPTION OF EMBODIMENTS

Embodiments will be described in detail below. The following description of preferred embodiments is merely an example in nature and is not intended to limit the scope, applications, or use of the present disclosure.

### [Method for Producing Non-Aqueous Electrolyte Solution]

A method for producing a non-aqueous electrolyte solution of the present embodiment includes replacement of an electrolyte solution solvent using a sulfonylimide solution containing a specific sulfonylimide compound which will be described later and an electrolyte solution solvent (A) to produce a non-aqueous electrolyte solution containing the sulfonylimide compound and an electrolyte solution solvent (B). The electrolyte solution solvent (B) is different from the electrolyte solution solvent (A). This production method includes at least preparation of the sulfonylimide solution and fractional distillation of replacing the electrolyte solution solvent (A) with the electrolyte solution solvent (B) by adding the electrolyte solution solvent (B) to the sulfonylimide solution.

### <Preparing>

### (Sulfonylimide Compound)

In the preparing, the sulfonylimide solution is prepared. The sulfonylimide solution contains a compound represented by the general formula (1):
[Chemical 1]

LiN(RSO₂)(FSO₂) (1)

(hereinafter referred to as a "sulfonylimide compound (1)", a fluorine-containing sulfonylimide salt).

The sulfonylimide compound (1) is an electrolyte of the non-aqueous electrolyte solution obtained by the production method of the present embodiment. In the general formula (1), R represents a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among the alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group with 1 to 6 carbon atoms include an alkyl group with 1 to 6 carbon atoms, with some or all of hydrogen atoms substituted with fluorine atoms. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. In particular, the fluoroalkyl group may be a perfluoroalkyl group.

As the substituent R, a fluorine atom and a perfluoroalkyl group (e.g., a perfluoroalkyl group with 1 to 6 carbon atoms, such as a trifluoromethyl group, a pentafluoroethyl group, and a heptafluoropropyl group) are preferable. Among them, the fluorine atom, the trifluoromethyl group, and the pentafluoroethyl group are more preferable, the fluorine atom and the trifluoromethyl group are yet more preferable, and the fluorine atom is still more preferable.

Specific examples of the sulfonylimide compound (1) include lithium bis(fluorosulfonyl)imide (LiN(FSO₂)₂, LiFSI), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, and lithium (fluorosulfonyl)(heptafluoropropylsulfonyl)imide. The sulfonylimide compounds may be used alone or in combination of two or more of them.

Among the sulfonylimide compounds (1), lithium bis(fluorosulfonyl)imide, lithium (fluorosulfonyl)(trifluoromethylsulfonyl)imide, and lithium(fluorosulfonyl)(pentafluoroethylsulfonyl)imide are preferable, and lithium bis(fluorosulfonyl)imide is more preferable, in view of improving battery performance. In other words, the sulfonylimide compound (1) in the sulfonylimide solution preferably contains LiN(FSO₂)₂.

As the sulfonylimide compound (1), a commercially available product may be used, or one synthesized by any known method may also be used. A method for synthesizing the sulfonylimide compound (1) is not particularly limited, and all known methods can be adopted. Examples of the method include methods described in International publication WO 2011/149095, Japanese Unexamined Patent Publication Nos. 2014-201453, 2010-168249, 2010-168308, and 2010-189372, International publication WO 2011/065502, Japanese Patent Application Publication No. 8-511274, International publications WO 2012/108284, WO 2012/117961, and WO 2012/118063, Japanese Unexamined Patent Publication Nos. 2010-280586, 2010-254543, and 2007-182410, and International publication WO 2010/010613. By the known method, a powder (solid) of the sulfonylimide compound (1) is obtained.

The sulfonylimide compound (1) may contain a production solvent used to produce the sulfonylimide compound (1) (a solvent remaining in the sulfonylimide compound (1) obtained by the known method) within a range where the object of the present invention is not impaired. The remaining solvent refers to, for example, a solvent used in a reaction for production of the sulfonylimide compound (1) and a solvent used in purification. Examples of such solvents include water; alcohol solvents such as methanol, ethanol, propanol, and butanol; carboxylic acid solvents such as formic acid and acetic acid; ketones such as acetone, methyl ethyl ketone, methyl isobutyl ketone, and diisobutyl ketone; nitrile solvents such as isobutyronitrile, acetonitrile, valeronitrile, and benzonitrile; ester solvents such as ethyl acetate, isopropyl acetate, and butyl acetate; aliphatic ether solvents such as diethyl ether, diisopropyl ether, t-butyl methyl ether, and cyclopentyl methyl ether; halogen solvents such as HF; nitro group-containing solvents such as nitromethane and nitrobenzene; nitrogen-containing organic solvents such as ethyl formamide and N-methylpyrrolidone; dimethyl sulfoxide; aromatic hydrocarbon solvents such as a glyme solvent, toluene, o-xylene, m-xylene, p-xylene, benzene, ethylbenzene, isopropylbenzene, 1,2,3-trimethylbenzene, 1,2,4-trimethylbenzene, 1,3,5-trimethylbenzene, tetralin, cymene, methylethylbenzene, 2-ethyltoluene, chlorobenzene, and dichlorobenzene; chain aliphatic hydrocarbon solvents such as pentane, hexane, heptane, octane, decane, dodecane, undecane, tridecane, decalin, 2,2,4,6,6-pentamethylheptane, isoparaffin (e.g., "MARUKASOL R" (a mixture of 2,2,4,6,6-pentamethylheptane and 2,2,4,4,6-pentamethylheptane, manufactured by Maruzen Petrochemical Co., Ltd.)), "ISOPAR (registered trademark) G" (C9-C11 isoparaffin manufactured by Exxon Mobil Corporation), "ISOPAR (registered trademark) E" (C8-C10 isoparaffin manufactured by Exxon Mobil Corporation), dichloromethane, chloroform, and 1,2-dichloroethane; cyclic aliphatic hydrocarbon solvents such as cyclohexane, methylcyclohexane, 1,2-dimethylcyclohexane, 1,3-dimethylcyclohexane, 1,4-dimethylcyclohexane, ethylcyclohexane, 1,2,4-trimethylcyclohexane, 1,3,5-trimethylcyclohexane, propylcyclohexane, butylcyclohexane, and "SWACLEAN 150" (a mixture of C9 alkylcyclohexane manufactured by Maruzen Petrochemical Co., Ltd.); aromatic ether solvents such as anisole, 2-methylanisole, 3-methylanisole, and 4-methylanisole; carbonate solvents such as ethylene carbonate, propylene carbonate, butylene carbonate, dimethyl carbonate, ethyl methyl carbonate, and diethyl carbonate; chain ether solvents such as dimethoxymethane and 1,2-dimethoxyethane; cyclic ether solvents such as tetrahydrofuran, 2-methyltetrahydrofuran, 1,3-dioxane, and 4-methyl-1,3-dioxolane; cyclic ester solvents such as γ-butyrolactone and γ-valerolactone; sulfolane solvents such as sulfolane and 3-methylsulfolane; N,N-dimethylformamide; dimethyl sulfoxide; and N-methyloxazolidinone.

### (Electrolyte Solution Solvent (A))

The sulfonylimide solution contains the electrolyte solution solvent (A) together with the sulfonylimide compound (1). The electrolyte solution solvent (A) can dissolve and disperse an electrolyte. Suitable examples of the electrolyte solution solvent (A) include a non-aqueous solvent that has a large dielectric constant and a boiling point of 60°C or higher at normal pressure, dissolves the electrolyte salt well, and is electrochemically stable in a wide range. An organic solvent having a low water content is more preferable. Examples of the electrolyte solution solvent (A) include: chain carbonate ester (carbonate) solvents such as dimethyl carbonate (DMC, boiling point: 90°C), ethyl methyl carbonate (EMC, boiling point: 107°C), and diethyl carbonate (DEC, boiling point: 125.8°C); chain ester solvents such as ethyl propionate (boiling point: 99°C) and propyl propionate (boiling point: 124°C). These solvents may be used alone or in combination of two or more of them. Among the examples of the electrolyte solution solvent (A), at least one selected from the group consisting of the chain carbonate solvent and the chain ester solvent is preferable, dimethyl carbonate, ethyl methyl carbonate, diethyl carbonate, ethyl propionate, and propyl propionate are more preferable, and dimethyl carbonate, ethyl methyl carbonate, and ethyl propionate are yet more preferable, in view of reducing the residual amount of the electrolyte solution solvent (A) in the non-aqueous electrolyte solution.

### (Method for Preparing Sulfonylimide Solution)

The sulfonylimide solution may be prepared by any method. Examples of the method include: a method of dissolving powder (solid) of the sulfonylimide compound (1) in the electrolyte solution solvent (A); a method of synthesizing the sulfonylimide compound (1) in the electrolyte solution solvent (A) (e.g., a method of using the electrolyte solution solvent (A) instead of butyl acetate used in Production Example 1 described in International publication WO 2016/052752); and a method of reacting HFSI [bis(fluorosulfonyl)imide] with a lithium salt such as LiOH and Li₂CO₃ in the electrolyte solution solvent (A).

As another method for preparing the sulfonylimide solution, an aqueous sulfonylimide solution containing the sulfonylimide compound (1) may be prepared first, and then the obtained aqueous sulfonylimide solution may be dehydrated for solvent replacement.

The aqueous sulfonylimide solution may be prepared by any method. Examples of the method include: a method of dissolving powder (solid) of the sulfonylimide compound (1) in water; and a method of mixing water, a lithium salt such as LiOH and Li₂CO₃, and HFSI [bis(fluorosulfonyl)imide] for reaction with each other (preparation of an aqueous LiFSI solution).

The concentration of the sulfonylimide compound (1) in the aqueous sulfonylimide solution is preferably 40 mass% or more, more preferably 45 mass% or more, yet more preferably 50 mass% or more, in view of dehydration efficiency. The upper limit of the concentration is preferably 70 mass% or less in view of dehydration efficiency.

The dehydration of the aqueous sulfonylimide solution for solvent replacement may be performed by any method, for example, by a method of dehydrating a solution obtained by adding the electrolyte solution solvent (A) to the aqueous sulfonylimide solution (a solution used for dehydration and replacement with the electrolyte solution solvent (A), hereinafter also referred to as a "water-containing sulfonylimide solution for dehydration").

For example, the electrolyte solution solvent (A) may be continuously added in the same amount as a portion to be removed of a distillate obtained by azeotropic distillation of water in the water-containing sulfonylimide solution for dehydration and the electrolyte solution solvent (A) added, or the distillate may be phase-separated to remove an aqueous phase and reflux an organic phase. This process (dehydrating) dehydrates the water-containing sulfonylimide solution for dehydration to obtain a sulfonylimide solution containing the added electrolyte solution solvent (A). In the dehydrating, water in the aqueous sulfonylimide solution is replaced with the electrolyte solution solvent (A) added, and the water content in the obtained sulfonylimide solution is sufficiently reduced. The sulfonylimide solution contains the sulfonylimide compound (1) as an electrolyte and the electrolyte solution solvent (A), and thus, can be directly used as a non-aqueous electrolyte solution or as a raw material of the non-aqueous electrolyte solution (an electrolyte solution or an electrolyte solution material).

The amount of the electrolyte solution solvent (A) added (used) has no lower limit and may be appropriately controlled according to the type and amount of the remaining solvent in the sulfonylimide compound (1). For example, the amount is preferably 10000 g or less, more preferably 1000 g or less, yet more preferably 500 g or less, still more preferably 200 g or less, even more preferably 100 g or less, particularly preferably 50 g or less, with respect to 100 g of the sulfonylimide compound (1).

The amount of the electrolyte solution solvent (A) added (used) is, for example, preferably 1 part by mass to 1,000 parts by mass, more preferably 5 parts by mass to 500 parts by mass, yet more preferably 10 parts by mass to 300 parts by mass, still more preferably 30 parts by mass to 200 parts by mass, and even more preferably 50 parts by mass to 100 parts by mass, with respect to 100 parts by mass of the sulfonylimide compound (1).

The dehydrating can be performed either under normal pressure or reduced pressure (or under normal pressure and reduced pressure combined during the dehydrating). However, the dehydrating is preferably performed under reduced pressure in view of reducing thermal degradation of the sulfonylimide solution caused by thermal decomposition of the sulfonylimide compound (1). The degree of decompression is not particularly limited and may be appropriately controlled according to the concentration of the sulfonylimide compound (1) and the type and amount of the electrolyte solution solvent (A). For example, the pressure is preferably reduced to 200 kPa or less, more preferably 40 kPa or less, yet more preferably 15 kPa or less, particularly preferably 10 kPa or less.

The heating temperature during the dehydrating is not particularly limited and may be appropriately controlled according to the degree of decompression and the type and amount of the electrolyte solution solvent (A). However, the temperature is preferably relatively low in view of reducing thermal degradation of the aqueous sulfonylimide solution caused by thermal decomposition of the sulfonylimide compound (1). The heating temperature is, for example, preferably 10°C to 110°C, more preferably 15°C to 100°C.

Time taken by the dehydrating is not particularly limited and may be appropriately controlled according to the degree of decompression, the heating temperature, and the type and amount of the electrolyte solution solvent (A). For example, the dehydrating is preferably performed for 0.1 hours to 24 hours, more preferably 0.5 hours to 12 hours, yet more preferably 1 hours to 8 hours, and particularly preferably 2 hours to 5 hours.

Any apparatus that can perform decompression and/or heating can be appropriately selected for the dehydrating according to the amount of the solution, the degree of decompression, and the heating temperature. For example, a tank reactor and a tank reactor capable of reducing the pressure can be used.

In the preparing, carbonate may be added to the sulfonylimide solution and/or the aqueous sulfonylimide solution as long as the object of the present invention is not impaired. The preparation of the sulfonylimide solution and/or the aqueous sulfonylimide solution may be accompanied by generation of a small amount of fluorosulfonic acid (HFSO₃) due to water content in the solution and heat generation during dissolution. Depending on the production method of the sulfonylimide compound (1) selected, the obtained sulfonylimide compound (1) may contain HF SO₃. HFSO₃ may lead to the deterioration of the aqueous sulfonylimide solution due to the decomposition of the sulfonylimide compound (1), and thus, it is desirable to capture (trap) HFSO₃ in the sulfonylimide solution and/or the aqueous sulfonylimide solution with a carbonate.

Examples of the carbonate include: alkali metal carbonates such as lithium carbonate (Li₂CO₃), sodium carbonate (Na₂CO₃), potassium carbonate (K₂CO₃), rubidium carbonate (Rb₂CO₃), and cesium carbonate (Cs₂CO₃); alkali earth metal carbonates such as beryllium carbonate (BeCO₃), magnesium carbonate (MgCO₃), calcium carbonate (CaCO₃), strontium carbonate (SrCO₃), and barium carbonate (BaCO₃); ammonium carbonate ((NH₄)₂CO₃); copper carbonate (II) (CuCO₃); iron carbonate (II) (FeCO₃); and silver carbonate (I) (Ag₂CO₃). The carbonates may be used alone or in combination of two or more of them.

Among the carbonates, the alkali metal carbonates and the alkali earth metal carbonates are preferable, the alkali metal carbonates are more preferable, Li₂CO₃, Na₂CO₃, K₂CO₃, and Cs₂CO₃ are yet more preferable, and Li₂CO₃ is still more preferable, in view of reliably trapping HFSO₃.

The amount of the carbonate added to the aqueous sulfonylimide solution may be appropriately determined according to the concentration of the sulfonylimide compound (1), but is preferably 0.1 mass% or more, more preferably 0.2 mass% or more, yet more preferably 0.3 mass% or more in 100 mass% of the aqueous sulfonylimide solution in view of reliably trapping HFSO₃. The upper limit of the addition amount is preferably 1 mass% or less, more preferably 0.8 mass% or less, yet more preferably 0.5 mass% or less, with respect to 100 mass% of the aqueous sulfonylimide solution, in view of reducing the amount of insoluble carbonate particles remaining in the aqueous sulfonylimide solution.

### (Sulfonylimide Solution)

The concentration of the sulfonylimide compound (1) in the sulfonylimide solution is preferably 30 mass% or more, more preferably 35 mass% or more, yet more preferably 40 mass% or more, in view of improving stability during storage. The concentration is preferably 70 mass% or less, more preferably 60 mass% or less, yet more preferably 50 mass% or less, in view of keeping the battery performance from decreasing due to the increase in viscosity of the electrolyte solution.

The water content (water concentration) in the sulfonylimide solution is preferably 10000 ppm by mass or less, more preferably 1000 ppm by mass or less, yet more preferably 100 ppm by mass or less, still more preferably 50 ppm by mass or less, in view of reducing the decomposition of the sulfonylimide compound (1) by water. The water content is preferably as low as possible, may be equal to or less than the detection limit, or substantially none (0 ppm by mass). The water content can be measured by a method described in Examples below, for example, a method using a Karl Fischer titrator.

### <Fractionally distilling>

In the fractionally distilling, the electrolyte solution solvent (A) and the electrolyte solution solvent (B) are separated by distillation in a mixture obtained by adding the electrolyte solution solvent (B) to the sulfonylimide solution obtained in the preparing. In the fractionally distilling, the mixture containing the sulfonylimide solution and the electrolyte solution solvent (B), i.e., a liquid mixture containing the sulfonylimide compound (1) and two types of electrolyte solution solvents (A) and (B) having different boiling points, is heated to vaporize and separate (remove) the electrolyte solution solvent (A) having a lower boiling point. This process replaces the electrolyte solution solvent (A) in the sulfonylimide solution with the electrolyte solution solvent (B) added to the solution. As a result, the amount of the electrolyte solution solvent (A) is reduced, and a non-aqueous electrolyte solution containing the electrolyte solution solvent (B) in a larger amount than the electrolyte solution solvent (A) is obtained.

### (Electrolyte Solution Solvent (B))

The electrolyte solution solvent (B) can dissolve and disperse an electrolyte. Suitable examples of the electrolyte solution solvent (B) include a non-aqueous solvent that has a large dielectric constant and a boiling point of 60°C or higher at normal pressure, dissolves the electrolyte salt well, and is electrochemically stable in a wide range. An organic solvent having a low water content is more preferable.

The electrolyte solution solvent (B) and the electrolyte solution solvent (A) have different boiling points. Specifically, the electrolyte solution solvent (B) has a higher boiling point than the electrolyte solution solvent (A), and the electrolyte solution solvent (B) and the electrolyte solution solvent (A) having a large difference in boiling point are preferably combined. The larger the difference in boiling point between the electrolyte solution solvents is, the more efficiently the fractional distillation occurs and the more the electrolyte solution solvent (A) in the mixture is reduced. Thus, a non-aqueous electrolyte solution containing the desired electrolyte solution solvent (B) is obtained. The difference in boiling point between the electrolyte solution solvent (A) and the electrolyte solution solvent (B) is preferably 60°C or more, more preferably 80°C or more, yet more preferably 100°C or more, still more preferably 130°C or more, in view of reducing the residual amount of the electrolyte solution solvent (A) in the non-aqueous electrolyte solution. The upper limit of the difference in boiling point is preferably 300°C or less, more preferably 200°C or less, yet more preferably 190°C or less, still more preferably 180°C or less, even more preferably 170°C or less, particularly preferably 160°C or less.

Examples of the electrolyte solution solvent (B) include a solvent having a boiling point of 200°C or higher at normal pressure. Specific examples include saturated cyclic carbonate ester (carbonate) solvents such as ethylene carbonate (EC, boiling point: 244°C), propylene carbonate (PC, boiling point: 242°C), 2,3-dimethyl ethylene carbonate (boiling point: 313°C), 1,2-butylene carbonate (boiling point: 250°C), and erythritan carbonate (boiling point: 345°C); and cyclic ester solvents such as γ-butyrolactone (boiling point: 204°C). These solvents may be used alone or in combination of two or more of them. Among the examples of the electrolyte solution solvent (B), at least one selected from the group consisting of the cyclic carbonate solvents and the cyclic ester solvents is preferable, and ethylene carbonate, propylene carbonate, and γ-butyrolactone are preferable, in view of reducing the residual amount of the electrolyte solution solvent (A) in the non-aqueous electrolyte solution.

The electrolyte solution solvent (A) and the electrolyte solution solvent (B) are preferably at least one selected from the group consisting of the carbonate solvents and the ester solvents, and both solvents are preferably the carbonate solvents or the ester solvents. When both solvents are the carbonate solvents, it is more preferable that the electrolyte solution solvent (A) is a chain carbonate solvent and the electrolyte solution solvent (B) is a cyclic carbonate solvent. When both solvents are the ester solvents, it is more preferable that the electrolyte solution solvent (A) is a chain ester solvent and the electrolyte solution solvent (B) is a cyclic ester solvent. When the cyclic carbonate solvent or the cyclic ester solvent is used for the production of the sulfonylimide compound (1), it is relatively difficult to reduce water mixed in the sulfonylimide compound (1) at the time of production. Thus, the water content in the sulfonylimide compound (1) is sufficiently reduced using the chain carbonate solvent or the chain ester solvent at the time of production of the sulfonylimide compound (1), and then the chain carbonate solvent or the chain ester solvent is replaced with the cyclic carbonate solvent or the cyclic ester solvent to obtain a non-aqueous electrolyte solution with a low percentage of water content. Examples of water that is mixed in the sulfonylimide compound (1) in the production include water generated by a neutralization reaction of a lithium salt such as LiOH and Li₂CO₃ with HFSI, water used in a reaction solvent, and water generated in extracting.

The amount of the electrolyte solution solvent (B) added (used) has no lower limit and may be appropriately controlled according to the type and amount of the electrolyte solution solvent (A). For example, the amount is preferably 10000 g or less, more preferably 1000 g or less, yet more preferably 500 g or less, still more preferably 200 g or less, even more preferably 100 g or less, particularly preferably 50 g or less, with respect to 100 g of the sulfonylimide compound (1).

The amount of the electrolyte solution solvent (B) added (used) is, for example, preferably 1 part by mass to 1,000 parts by mass, more preferably 5 parts by mass to 500 parts by mass, yet more preferably 10 parts by mass to 300 parts by mass, still more preferably 30 parts by mass to 200 parts by mass, even more preferably 50 parts by mass to 100 parts by mass, with respect to 100 parts by mass of the sulfonylimide compound (1).

The amount of the electrolyte solution solvent (B) added (used) is preferably 10000 g or less, more preferably 1000 g or less, yet more preferably 500 g or less, still more preferably 200 g or less, even more preferably 100 g or less, with respect to 100 g of the sulfonylimide compound (1).

### (Method of Fractional Distillation)

A method for distilling the electrolyte solution solvent (A) off from the liquid mixture of the sulfonylimide solution and the electrolyte solution solvent (B) (fractional distillation of the electrolyte solution solvent (A) and the electrolyte solution solvent (B)) is not particularly limited, and any known method can be employed. For example, the liquid mixture may be decompressed and/or heated.

The fractionally distilling can be performed either under normal pressure or reduced pressure (or under normal pressure and reduced pressure combined during the fractionally distilling). However, the fractionally distilling is preferably performed under reduced pressure in view of reducing thermal degradation of the aqueous sulfonylimide solution caused by thermal decomposition of the sulfonylimide compound (1). The degree of decompression is not particularly limited and may be appropriately controlled according to the concentration of the sulfonylimide compound (1) and the types and amounts of the electrolyte solution solvents (A) and (B). For example, the pressure is preferably reduced to 200 kPa or less, more preferably 40 kPa or less, yet more preferably 15 kPa or less, still more preferably 10 kPa or less, even more preferably 5 kPa or less. The degree of decompression may be constant (the same) or changed during the fractionally distilling. For example, the electrolyte solution solvent (A) may be distilled off at a first reduced pressure, and then the electrolyte solution solvent (A) may be further distilled off at a second reduced pressure lower than the first reduced pressure.

The heating temperature during the fractionally distilling is not particularly limited and may be appropriately controlled according to the degree of decompression and the types and amounts of the electrolyte solution solvents (A) and (B). However, the temperature is preferably relatively low in view of reducing thermal degradation of the aqueous sulfonylimide solution caused by thermal decomposition of the sulfonylimide compound (1). The heating temperature is, for example, preferably 10°C to 110°C, more preferably 15°C to 100°C, yet more preferably 20°C to 80°C.

Time taken by the fractionally distilling is not particularly limited and may be appropriately controlled according to the degree of decompression, the heating temperature, and the types and amounts of the electrolyte solution solvents (A) and (B). For example, the fractionally distilling is preferably performed for 0.1 hours to 24 hours, more preferably 0.2 hours to 12 hours, yet more preferably 0.5 hours to 8 hours, particularly preferably 0.5 hours to 5 hours.

Any apparatus that can perform decompression and/or heating can be appropriately used for the fractionally distilling according to the amount of the solution, the degree of decompression, and the heating temperature. For example, a tank reactor and a tank reactor capable of reducing the pressure can be used.

### <Other Processes>

The method for producing the non-aqueous electrolyte solution may include other processes as long as the object of the present invention is not impaired. Examples of the other processes include filtration, column chromatography, treatment with activated carbon, and treatment with a molecular sieve.

Through the processes (operations) described above, a non-aqueous electrolyte solution containing the sulfonylimide compound (1) and the electrolyte solution solvent (B) is obtained by solvent replacement in the sulfonylimide solution containing the sulfonylimide compound (1) and the electrolyte solution solvent (A). This non-aqueous electrolyte solution has a lower percentage of water content than a non-aqueous electrolyte solution obtained by a known method.

When an aqueous sulfonylimide solution containing the sulfonylimide compound (1) is used for the preparation of the sulfonylimide solution, the electrolyte solution solvent (A) is added to the aqueous solution for dehydration to obtain a non-aqueous electrolyte solution having a much lower percentage of water content. That is, the method for producing the non-aqueous electrolyte solution may further include, before the preparing of the sulfonylimide solution (second preparing), preparing an aqueous sulfonylimide solution (first preparing) and dehydrating the aqueous sulfonylimide solution obtained in the first preparing by adding the electrolyte solution solvent (A) to replace the solvent in the aqueous solution with the electrolyte solution solvent (A).

### [Non-Aqueous Electrolyte Solution]

### (Electrolyte)

The electrolyte (the non-aqueous electrolyte solution) only has to include the sulfonylimide compound (1), but may also include another electrolyte (an electrolyte other than the sulfonylimide compound (1)). The other electrolyte may be mixed with the non-aqueous electrolyte solution or may be mixed with the sulfonylimide solution and/or the aqueous sulfonylimide solution in the preparing the non-aqueous electrolyte solution. Examples of the other electrolyte include an imide salt and a non-imide salt.

Examples of the imide salt include another fluorine-containing sulfonylimide salt (hereinafter referred to as "other sulfonylimide compound") that is different from the sulfonylimide compound (1). Examples of the other sulfonylimide compound include: lithium bis(trifluoromethylsulfonyl)imide (LiN(CF₃SO₂)₂, hereinafter also referred to as "LiTFSI"); lithium bis(pentafluoroethylsulfonyl)imide; lithium bis(heptafluoropropylsulfonyl)imide; and non-lithium salts of fluorine-containing sulfonylimide listed above as the sulfonylimide compound (1) (e.g., salts obtained by substituting lithium (ions) in the sulfonylimide compound (1) with cations other than the lithium ion). Examples of the salt substituted with cations other than the lithium ions include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more. Alternatively, as the other sulfonylimide compound, a commercially available product may be used, or one obtained by synthesis using a known method may also be used.

Examples of the non-imide salt include salts of non-imide-based anions and cations (lithium ions and the cations shown above as examples). Examples of the non-imide salt include: lithium salts such as fluorophosphoric acid compounds including LiPF₆, LiPF₃(CF₃)₃, LiPF₃(C₂F₅)₃, LiPF₃(C₃F7)₃, and LiPF₃(C₄F₉)₃, fluoroboric acid compounds including LiBF₄, LiBF(CF₃)₃, LiBF(C₂F₅)₃, and LiBF(C₃F₇)₃, lithium hexafluoroarsenate (LiAsF₆), LiSbF₆, LiClO₄, LiSCN, LiAlF₄, CF₃SO₃Li, LiC[(CF₃SO₂)₃], LiN(NO₂), and LiN[(CN)₂]; and non-lithium salts such as salts obtained by substituting lithium (ions) in these lithium salts with the above-listed cations (e.g., NaBF₄, NaPF₆, and NaPF₃(CF₃)₃). These non-imide salts may be used alone or in combination of two or more of them. Alternatively, as the non-imide salt, a commercially available product may be used, or one obtained by synthesis using a known method may also be used.

These electrolytes (the sulfonylimide compound (1) and the other electrolytes) may be present (contained) in the ionic form in the non-aqueous electrolyte solution.

The concentration of the sulfonylimide compound (1) in the non-aqueous electrolyte solution (the content of the sulfonylimide compound (1) or the total content if two or more sulfonylimide compounds (1) are used, the same applies hereinafter) is preferably 30 mass% or more with respect to the whole non-aqueous electrolyte solution (the total of 100 mass% of the components in the non-aqueous electrolyte solution) in view of improving the battery performance. The concentration is preferably 70 mass% or less, more preferably 60 mass% or less, yet more preferably 50 mass% or less, in view of keeping the battery performance from decreasing due to the increase in viscosity of the electrolyte solution.

The content of the sulfonylimide compound (1) in the non-aqueous electrolyte solution is preferably 10 mol% or more, more preferably 15 mol% or more, with respect to the total of 100 mol% of the electrolyte salt contained in the non-aqueous electrolyte solution, in view of improving the battery performance. The upper limit of the content is preferably 50 mol% or less.

### (Other Electrolyte Solution Solvent)

The non-aqueous electrolyte solution may contain other electrolyte solution solvent (the other electrolyte solution solvent than the electrolyte solution solvents (A) and (B)) as long as the object of the present invention is not impaired. The other electrolyte solution solvent may be mixed with the non-aqueous electrolyte solution, or may be mixed with the sulfonylimide solution and/or the aqueous sulfonylimide solution in the preparing of the non-aqueous electrolyte solution. Any solvent that can dissolve and disperse the electrolyte can be used as the other electrolyte solution solvent. Suitable examples of the other electrolyte solution solvent include a non-aqueous solvent that has a large dielectric constant and a boiling point of 60°C or higher at normal pressure, dissolves the electrolyte salt well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ethers, triethylene glycol dimethyl ether, tetraethylene glycol dimethyl ether, 1,4-dioxane, and 1,3-dioxolane; cyclic carbonate ester solvents having an unsaturated bond such as vinylene carbonate, methyl vinylene carbonate, ethyl vinylene carbonate, 2-vinyl ethylene carbonate, and phenylethylene carbonate; fluorine-containing cyclic carbonate ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as γ-butyrolactone, γ-valerolactone, and δ-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; nitromethane; 1,3-dimethyl-2-imidazolidinone; 1,3-dimethyl-3,4,5,6-tetrahydro-2(1H)-pyrimidinone; 3-methyl-2-oxazolidinone; and chain ester solvents such as ethyl acetate, and butyl acetate. These solvents may be used alone or in combination of two or more of them.

### (Additive)

The non-aqueous electrolyte solution may contain an additive for improving various characteristics of the lithium ion secondary battery. The additive may be added to the non-aqueous electrolyte solution or may be added to the sulfonylimide solution and/or the aqueous sulfonylimide solution in the preparing the non-aqueous electrolyte solution. Examples of the additive include: carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as vinylene carbonate, fluoroethylene carbonate (FEC), trifluoropropylene carbonate, phenylethylene carbonate, and erythritan carbonate; sulfamic acid (amidosulfuric acid, H₃NSO₃); sulfamate salts (alkali metal salts such as lithium salts, sodium salts, and potassium salts; alkali earth metal salts such as calcium salts, strontium salts, and barium salts; other metal salts such as manganese salts, copper salts, zinc salts, iron salts, cobalt salts, and nickel salts; ammonium salts; and guanidine salts); fluorosulfonic acid compounds such as lithium fluorosulfonate (LiFSO₃), sodium fluorosulfonate (NaFSO₃), potassium fluorosulfonate (KFSO₃), and magnesium fluorosulfonate (Mg(FSO₃)₂); fluorophosphoric acid compounds such as lithium monofluorophosphate (Li₂PO₃F) and lithium difluorophosphate (LiPO₂F₂); and fluoro oxalate compounds such as lithium salts having an oxalate skeleton such as lithium bis(oxalato)borate (LiBOB), lithium difluoro(oxalato)borate (LiDFOB), lithium difluoro(oxalato) phosphate (LIDFOP), lithium tetrafluoro(oxalato)phosphate (LITFOP), lithium difluorobis(oxalato)phosphate (LiDFBOP), and lithium tris(oxalato)phosphate. These additives may be used alone or in combination of two or more of them.

### (Water Content)

The water content (water concentration, the percentage of water content) in the non-aqueous electrolyte solution is preferably 10000 ppm by mass (1 mass%) or less, more preferably 1000 ppm by mass or less, yet more preferably 100 ppm by mass or less, still more preferably 50 ppm by mass or less, in view of reducing decomposition of the sulfonylimide compound (1) by water. The water content is preferably as low as possible, and may be equal to or less than the detection limit or substantially none (0 ppm by mass). The water content can be measured by a method described in Examples below, for example, a method using a Karl Fischer titrator.

The non-aqueous electrolyte solution may contain water at a concentration of, for example, 0.1 ppm by mass or more, 0.3 ppm by mass or more, 0.5 ppm by mass or more, 0.7 ppm by mass or more, 0.8 ppm by mass or more, 1 ppm by mass or more, 1.5 ppm by mass or more, 2 ppm by mass or more, 3 ppm by mass or more, 5 ppm by mass or more, 7 ppm by mass or more, or 10 ppm by mass or more.

### (Residual Amount of Electrolyte Solution Solvent (A))

The residual amount of the electrolyte solution solvent (A) contained in the non-aqueous electrolyte solution is preferably 25 mol% or less, more preferably 20 mol% or less, with respect to 100 mol% of the non-aqueous electrolyte solution, in view of reducing the amount of the electrolyte solution solvent (A) and obtaining a non-aqueous electrolyte solution containing the desired electrolyte solution solvent (B).

The residual amount of the electrolyte solution solvent (A) contained in the non-aqueous electrolyte solution is preferably 30 mass% or less, more preferably 25 mass% or less, yet more preferably 20 mass% or less, with respect to the whole non-aqueous electrolyte solution (the total of 100 mass% of the components in the non-aqueous electrolyte solution) in view of reducing the amount of the electrolyte solution solvent (A) and obtaining a non-aqueous electrolyte solution containing the desired electrolyte solution solvent (B).

The non-aqueous electrolyte solution described above is used, for example, for a battery (a battery having a charge-discharge mechanism) and a power storage (electrochemical) device (or an ion conductive material constituting such a device). Specifically, the electrolyte solution can be used as an electrolyte solution of, for example, a primary battery, a secondary battery (e.g., a lithium (ion) secondary battery), a fuel battery, an electrolytic capacitor, an electric double layer capacitor, a solar battery, and an electrochromic display device. Hereinafter, the description will be made with reference to a battery (especially a secondary battery) as an example.

### <Effects>

The method for producing the non-aqueous electrolyte solution of the present embodiment can provide the following effects.
- By the method for producing the non-aqueous electrolyte solution, a sulfonylimide solution containing a sulfonylimide compound (1) and an electrolyte solution solvent (A) is prepared, and an electrolyte solution solvent (B) is added to the obtained solution for fractional distillation of the obtained liquid mixture to distill off the electrolyte solution solvent (A). This series of processes (operations) allows replacement of the electrolyte solution solvent (A) with the desired electrolyte solution solvent (B) without the need of complicated processes such as extracting.
- The method of producing the non-aqueous electrolyte solution can provide a non-aqueous electrolyte solution having a low percentage of water content when at least one selected from the group consisting of a chain carbonate solvent and a chain ester solvent is used as the electrolyte solution solvent (A), and at least one selected from the group consisting of a cyclic carbonate solvent and a cyclic ester solvent is used as the electrolyte solution solvent (B).
- When the method for producing the non-aqueous electrolyte solution further includes a series of processes (operations), i.e., preparing an aqueous sulfonylimide solution containing the sulfonylimide compound (1) first, and then adding the electrolyte solution solvent (A) to the aqueous solution for dehydration, the percentage of water content of the obtained sulfonylimide solution is further reduced. This provides a non-aqueous electrolyte solution having a much lower percentage of water content.

### EXAMPLES

The present disclosure will be described below by way of examples. The present disclosure is not limited to the following Examples. The following Examples can be modified and changed based on the spirit of the present disclosure, and are not excluded from the scope of the present disclosure.

### «Synthesis Example 1 (Synthesis of LiFSI/DMC Solution)»

In a dry room at a dew point of -40°C or lower, 301.01 g of an aqueous LiFSI solution (LiFSI/H₂O, aqueous sulfonylimide solution) containing 50 mass% lithium bis(fluorosulfonyl)imide (hereinafter referred to as "LiFSI," Mw: 187.06, manufactured by NIPPON SHOKUBAI CO., LTD.) and 23.13 g of dimethyl carbonate (DMC, Mw: 90.08) were put in a 500 mL three-neck separable flask having a cooling tube connected to a vacuum pump, a thermometer for measuring the internal temperature, and a solvent inlet and containing a stir bar.

Subsequently, the inside of the flask was decompressed to 10 kPa using the vacuum pump, and then the flask was immersed in an oil bath and gradually heated (oil bath temperature: up to 98°C). Simultaneously with the start of the distillation of the solvent, DMC was continuously added from the solvent inlet to keep the liquid level constant. The dropwise addition was stopped when the unit consumption of DMC reached 52.5 (per weight of LiFSI), and the pressure was released. The water content (water concentration) in the LiFSI/DMC solution (sulfonylimide solution) after the pressure release was measured at 13.3 ppm by mass by the following method. The LiFSI/DMC solution was filtered under pressure using a PTFE (polytetrafluoroethylene) membrane filter having a pore diameter of 3 µm to remove turbidity components.

### [Measurement of Water Content]

The water content (water concentration) of the LiFSI/DMC solution was measured using a Karl Fischer Titrator AQ-2000 (manufactured by HIRANUMA Co., Ltd.), with Aqualyte RS-A (manufactured by HIRANUMA Co., Ltd.) as a generator solution and Aqualyte CN (manufactured by HIRANUMA Co., Ltd.) as a counter solution.

### «Synthesis Example 2 (Synthesis of LiFSI/EMC Solution)»

A LiFSI/EMC solution (sulfonylimide solution) was prepared in the same manner as in Synthesis Example 1 except that ethyl methyl carbonate (EMC, Mw: 104.11) was used as the solvent to be continuously added. The water content (water concentration) in the obtained LiFSI/EMC solution measured by the above-described method was 15.4 ppm by mass.

### «Synthesis Example 3 (Synthesis of LiFSI/EtCOOEt Solution)»

A LiFSI/EtCOOEt solution (sulfonylimide solution) was prepared in the same manner as in Synthesis Example 1 except that ethyl propionate (EtCOOEt, Mw: 102.13) was used as the solvent to be continuously added. The water content (water concentration) in the obtained LiFSI/EtCOOEt solution measured by the above-described method was 15.7 ppm by mass.

### <Example 1>

To 25 g of the LiFSI/DMC solution obtained in Synthesis Example 1, 15 g of ethylene carbonate (EC, Mw: 88.06) was added, and the mixture was stirred until uniform. Thereafter, the pressure was reduced to 5 kPa using a rotary evaporator ("REN-1000" manufactured by IWAKI) heated to 60°C for solvent distillation for 30 minutes. The pressure was further reduced to 2.5 kPa, and the solvent distillation was performed for another 30 minutes. Thus, a LiFSI/EC solution (non-aqueous electrolyte solution) was obtained. The solvent composition of the LiFSI/EC solution was analyzed by ¹H-NMR, and the water content was measured by the above-described method.

### [¹H-NMR]

For the ¹H-NMR measurement, a system "Unity Plus-400" manufactured by Varian Inc. (internal reference material: trifluorotoluene, number of measurements: 64) was used.

### <Example 2>

A LiFSI/PC solution (non-aqueous electrolyte solution) was obtained in the same manner as in Example 1 except that EC was replaced with propylene carbonate (PC, Mw: 102.09). The solvent composition was analyzed by ¹H-NMR, and the water content was measured by the method described above.

### <Example 3>

A LiFSI/EC solution (non-aqueous electrolyte solution) was obtained in the same manner as in Example 1 except that the LiFSI/DMC solution obtained in Synthesis Example 1 was replaced with the LiFSI/EMC solution obtained in Synthesis Example 2. The solvent composition was analyzed by ¹H-NMR, and the water content was measured by the method described above.

### <Example 4>

A LiFSI/PC solution (non-aqueous electrolyte solution) was obtained in the same manner as in Example 3 except that EC was replaced with PC. The solvent composition was analyzed by ¹H-NMR, and the water content was measured by the method described above.

### <Example 5>

To 25 g of the LiFSI/EtCOOEt solution obtained in Synthesis Example 3, 15 g of y-butyrolactone (GBL, Mw: 86.09) was added, and the mixture was stirred until uniform. Thereafter, the pressure was reduced to 5 kPa using a rotary evaporator ("REN-1000" manufactured by IWAKI) heated to 60°C for solvent distillation for 30 minutes. The pressure was further reduced to 2.5 kPa, and the solvent distillation was performed for another 30 minutes. Thus, a LiFSI/GBL solution (non-aqueous electrolyte solution) was obtained. The solvent composition of the LiFSI/GBL solution was analyzed by ¹H-NMR, and the water content was measured by the method described above.

### <Comparative Example 1>

Into a 100 mL eggplant flask, 19.83 g of an aqueous LiFSI solution (LiFSI/H₂O) containing 47 mass% LiFSI (manufactured by NIPPON SHOKUBAI CO., LTD) and 6.76 g of EC were put, and the mixture was stirred until uniform. Thereafter, the pressure in the flask was reduced to 5 kPa using a rotary evaporator ("REN-1000" manufactured by IWAKI) heated to 60°C for solvent distillation for 30 minutes. When the distillation stopped, the pressure was released, and 9.29 g of EC was added to perform the distillation again under the same conditions. When the distillation stopped, the pressure was released, and a LiFSI/EC solution containing 35 mass% LiFSI was obtained. The solvent composition of the LiFSI/EC solution was analyzed by ¹H-NMR, and the water content (water concentration) was measured by the method described above.

Table 1 shows the results of the analysis of each of the obtained LiFSI solutions, i.e., the amount of electrolyte, the composition of the electrolyte solution solvents, and the water content.

**[Table 1]**

| | (Electrolyte) [mass%] | Electrolyte solution solvent (A) [mass%] | | | Electrolyte solution solvent (B) [mass%] | | | Water content [ppm by mass] |
|---|---|---|---|---|---|---|---|---|
| | LiFSI | DMC | EMC | EtCOOEt | EC | PC | GBL | |
| Example 1 | 35.7 | 6.5 | - | - | 57.8 | - | - | 13.1 |
| Example 2 | 35.1 | 8.1 | - | - | - | 56.8 | - | 12.5 |
| Example 3 | 33.8 | - | 11.2 | - | 55.0 | - | - | 14.6 |
| Example 4 | 32.2 | - | 15.0 | - | - | 52.8 | - | 13.5 |
| Example 5 | 34.5 | - | - | 10.3 | - | - | 55.2 | 15.1 |
| Comparative Example 1 | 35.0 | - | - | - | 62.2 | - | - | 28000 |

### INDUSTRIAL APPLICABILITY

As can be seen from above, the present disclosure is suitable for a non-aqueous electrolyte solution used in lithium ion secondary batteries.

## Claims

1. A method for producing a non-aqueous electrolyte solution containing a sulfonylimide compound represented by the general formula (1) and an electrolyte solution solvent (B), the method comprising:
preparing a sulfonylimide solution containing the sulfonylimide compound represented by the general formula (1) and an electrolyte solution solvent (A) different from the electrolyte solution solvent (B); and
fractionally distilling off the electrolyte solution solvent (A) by adding the electrolyte solution solvent (B) to the sulfonylimide solution obtained in the preparing,
LiN(RSO₂)(FSO₂) (1) (where R represents a fluorine atom, an alkyl group with 1 to 6 carbon atoms, or a fluoroalkyl group with 1 to 6 carbon atoms).

2. The method of claim 1, wherein
a difference in boiling point between the electrolyte solution solvent (A) and the electrolyte solution solvent (B) is from 60°C to 300°C inclusive.

3. The method of claim 2, wherein
the electrolyte solution solvent (A) has a boiling point of 60°C or higher.

4. The method of claim 2 or 3, wherein
the electrolyte solution solvent (B) has a boiling point of 200°C or higher.

5. The method of any one of claims 1 to 4, wherein
the electrolyte solution solvent (A) and the electrolyte solution solvent (B) are each at least one selected from the group consisting of a carbonate solvent and an ester solvent.

6. The method of claim 5, wherein
the electrolyte solution solvent (A) is at least one selected from the group consisting of a chain carbonate solvent and a chain ester solvent.

7. The method of claim 5 or 6, wherein
the electrolyte solution solvent (B) is at least one selected from the group consisting of a cyclic carbonate solvent and a cyclic ester solvent.

8. The method of any one of claims 1 to 7, wherein
the non-aqueous electrolyte solution contains 10,000 ppm by mass or less of water.

9. The method of any one of claims 1 to 8, wherein
in the preparing, the electrolyte solution solvent (A) is added to an aqueous sulfonylimide solution containing the sulfonylimide compound represented by the general formula (1) for dehydration.

10. The method of any one of claims 1 to 9, wherein
a residual amount of the electrolyte solution solvent (A) in the non-aqueous electrolyte solution is 20 mass% or less with respect to 100 mass% of the non-aqueous electrolyte solution.
